(19) Europäisches Patentamt
European Patent Office
Office européen des brevets

(11) **EP 1 863 355 B1**

(12) **EUROPÄISCHE PATENTSCHRIFT**

(45) Veröffentlichungstag und Bekanntmachung des Hinweises auf die Patenterteilung:
**24.02.2010  Patentblatt 2010/08**

(51) Int Cl.:
***A23G 1/21*** (2006.01)

(21) Anmeldenummer: **06700204.8**

(86) Internationale Anmeldenummer:
**PCT/CH2006/000032**

(22) Anmeldetag: **13.01.2006**

(87) Internationale Veröffentlichungsnummer:
**WO 2006/102773 (05.10.2006 Gazette 2006/40)**

(54) **VORRICHTUNG ZUR HERSTELLUNG SCHALENARTIG GEFORMTER VERZEHRGÜTER**

DEVICE FOR PRODUCING GOODS FOR CONSUMPTION THAT ARE FORMED IN A SHELL

DISPOSITIF DE FABRICATION DE PRODUITS ALIMENTAIRES EN FORME DE COQUILLE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.03.2005  DE 102005015052**

(43) Veröffentlichungstag der Anmeldung:
**12.12.2007  Patentblatt 2007/50**

(73) Patentinhaber: **Bühler AG**
**9240 Uzwil (CH)**

(72) Erfinder: **PAUL, Michael**
**51702 Bergneustadt (DE)**

(74) Vertreter: **Wilming, Martin**
**Hepp Wenger Ryffel AG**
**Friedtalweg 5**
**9500 Wil (CH)**

(56) Entgegenhaltungen:
**EP-A- 0 925 720     EP-A- 1 300 086**
**EP-A- 1 346 642     DE-C- 966 073**

**Beschreibung**

Die Erfindung bezieht sich auf eine Vorrichtung zur Herstellung schalenartig geformter Verzehrgüter aus einer Fettmasse, insbesondere einer kakaohaltigen bzw. schokoladeartigen Fettmasse. Derartig hergestellte Schokoladenhülsen werden z.B. für die Herstellung von Pralinen verwendet.

Eine derartige Vorrichtung enthält eine Vielzahl mit der Fettmasse im fliessfähigen temperierten Zustand befüllbarer Hohlformen, die als Vertiefungen in einem Formenblock ausgebildet sind. Die Innenfläche einer jeweiligen Hohlform bestimmt dabei die Aussenfläche eines herzustellenden schalenartigen Verzehrgutes. Weiterhin enthält die Vorrichtung eine Vielzahl stempelartiger Kühlkörper, die an einer Haltevorrichtung beweglich gelagert sind, wobei jeweils ein Kühlkörper in jeweils eine der Hohlformen absenkbar. Die Aussenfläche eines jeweiligen Kühlkörpers bestimmt dabei die Innenfläche des herzustellenden schalenartigen Verzehrgutes.

Mit dieser Vorrichtung lassen sich schalenartig geformte Verzehrgüter herstellen.

Zu Beginn des Verfahrens wird geschmolzene Fettmasse in die Hohlformen eines Formenblocks bzw. einer Formenplatte eindosiert, so dass diese zu einem Teil mit der geschmolzenen Masse gefüllt werden. In der Regel werden die teilgefüllten Hohlformen kurz vibriert, um eventuelle Gaseinschlüsse auszutreiben und/oder die geschmolzene Masse zu verteilen. Dann wird die Haltevorrichtung mit den an ihr angebrachten Kühlkörpern gegen den Formenblock bzw. die Formenplatte abgesenkt, wobei die stempelartigen Kühlkörper in die mit der geschmolzenen Masse teilgefüllten Hohlformen eindringen und die geschmolzene Masse verdrängen, die sich dann in dem jeweiligen Hohlraum zwischen der Aussenfläche eines Kühlkörpers und der Innenfläche einer Hohlform verteilt. Die Haltevorrichtung mit den stempelartigen Kühlkörpern verbleibt dann während einer kurzen Verweilzeit in dieser abgesenkten Stellung, bis die in den jeweiligen Hohlräumen verteilte Masse erstarrt ist. Anschliessend wird die Haltevorrichtung wieder angehoben, und die fertig geformten schalenartigen Verzehrgüter aus der erstarrten Masse können aus den Hohlformen entnommen werden. Diese Verfahren wird auch als "Kaltstempeln" bezeichnet.

Als Formenblock oder Formenplatte mit Hohlformen bzw. Alveolen wird in der Regel eine Kunststoffplatte verwendet. Die Kühlkörper an der Haltevorrichtung bestehen in der Regel aus einem möglichst gut wärmeleitenden Metall, wie z.B. Aluminium oder Kupfer. Im Laufe der Zeit kann es an den Formenplatten zu Verformungen und Abnutzungserscheinungen kommen. Da sie relativ dünn sind, neigen die Formenplatten dazu, sich zu verbiegen und zu wölben, so dass sie nicht mehr ganz eben sind, wenn man sie auf einen Formentisch legt. Um den jeweiligen Hohlraum zwischen einer Kühlkörper-Aussenfläche und einer Hohlform-Innenfläche möglichst gut abzudichten, müssen den jeweiligen Kühlkörpern zugeordnete Dichtungsmittel bei jedem Kaltstempel-Vorgang von oben gegen die Formenplatte gedrückt werden.

Diese Verformungen und Abnutzungen der Formenplatte führen mit der Zeit dazu, dass eine 100%-ige Abdichtung zwischen der Formenplatte und den Dichtungsmitteln nicht mehr bei allen Kühlkörper/Hohlform-Paaren gegeben ist.

Um dieses Problem zu lösen, wurde z.B. in der EP 0 945 069 A1 oder in der EP 0 925 720 A1 vorgeschlagen, sämtliche Kühlkörper an der Haltevorrichtung unabhängig aufzuhängen. Dies-ermöglicht zwar eine Verbesserung der Abdichtung jeder einzelnen Hohlform, doch muss dafür eine grosse Anzahl von Einzelteilen an der Haltevorrichtung und somit ein grosser Kostenaufwand in Kauf genommen werden. Zwischen der Haltevorrichtung und jedem der an ihr unabhängig aufgehängten Kühlkörper ist nämlich ein Gleitlager notwendig, um eine Relativbewegung zwischen der Haltevorrichtung und den jeweiligen Kühlkörpern zu ermöglichen.

Die EP 1 300 086 A1 schlägt vor, Unebenheiten der Formenplatte durch den Stempel bzw. Kühlkörper auszugleichen. Von einer unabhängigen Aufhängung von Stempeln bzw. Kühlkörpern an einer Haltevorrichtung ist aber nicht die Rede, sondern die Haltevorrichtung und die Kühlkörper samt Dichtungsmittel bilden einen Starrkörper. Es sind relativ grosse Kräfte notwendig, um eine verzogene Formenplatte in den ebenen Zustand zu drücken.

Der Erfindung liegt die Aufgabe zugrunde, eine Vorrichtung der eingangs genannten Art bereitzustellen, die eine praktisch 100%-ige Abdichtung zwischen der Formenplatte und den Dichtungsmitteln bei allen Kühlkörper/Hohlform-Paaren auch nach einer langen Betriebszeit der Vorrichtung ermöglicht.

Diese Aufgabe wird durch die Vorrichtung gemäss Anspruch 1 gelöst.

Die erfindungsgemässe Vorrichtung weist die folgenden Mittel auf:

> ➢ eine Vielzahl mit der Fettmasse im fliessfähigen temperierten Zustand befüllbarer Hohlformen, die als Vertiefungen in einem Formenblock ausgebildet sind, wobei die Innenfläche einer jeweiligen Hohlform die Aussenfläche eines herzustellenden schalenartigen Verzehrgutes bestimmt;
> ➢ eine Vielzahl stempelartiger Kühlkörper, die an einer Haltevorrichtung beweglich gelagert sind, wobei jeweils ein Kühlkörper in jeweils eine der Hohlformen absenkbar ist und die Aussenfläche eines jeweiligen Kühlkörpers die Innenfläche des herzustellenden schalenartigen Verzehrgutes bestimmt.

Erfindungsgemäss besteht die Vielzahl der an der Haltevorrichtung gelagerten Kühlkörper aus einzelnen Kühlkörper-Gruppen, innerhalb derer mehrere Kühlkörper miteinander gekoppelt an der Haltevorrichtung gelagert sind, während die jeweiligen Kühlkörper-Gruppen voneinander unabhängig an der Haltevorrichtung gelagert sind.

Es hat sich überraschend gezeigt, dass durch diese gruppenweise Lagerung der Kühlkörper mit voneinander unabhängig gelagerten Kühlkörper-Gruppen beim Kaltstempeln eine sehr gute Abdichtung des jeweiligen Hohlraumes zwischen einer Kühlkörper-Aussenfläche und einer Hohlform-Innenfläche für alle Kühlkörper/Hohlform-Paarungen erreicht wird. Vor allem können aber dadurch Unterschiede der Dosiermenge zwischen unterschiedlichen Kühlkörper-Gruppen ausgeglichen werden. Somit können unterschiedliche Dosiervolumen und/oder unterschiedliche auszufüllende Volumen zwischen den jeweiligen Kühlkörpern (Stempeln) und den Hohlformen (Alveolen) ausgeglichen werden. Dadurch ist eine problemlose Verarbeitung unterschiedlicher Dosiervolumen möglich.

Es können somit verschiedene Füllungsvolumen/Dosiervolumen durch die erfindungsgemässe Vorrichtung mit einem vertretbaren Aufwand ausgeglichen werden.

Zweckmässigerweise sind die Kühlkörper-Gruppen aus aneinandergrenzenden Kühlkörpern bestehende Kühlkörper-Blöcke. Insbesondere handelt es sich bei den Kühlkörper-Gruppen jeweils um zwei Kühlkörper aufweisende Zweiergruppen, um jeweils drei Kühlkörper aufweisende Dreiergruppen oder um jeweils vier Kühlkörper aufweisende Vierergruppen. Diese Kühlkörper-Blöcke sind an der Haltevorrichtung vorzugsweise gefedert gelagert.

Vorzugsweise sind die Kühlkörper innerhalb einer Kühlkörper-Gruppe miteinander starr verbunden. Bei einer besonders bevorzugten Ausführung ist die Kühlkörper-Gruppe ein einstückiges Gebilde, das mehrere stempelartige Kühlkörper aufweist. Diese Kühlkörper-Gruppe kann von einem gemeinsamen System von Kühlleitungen durchzogen sein.

Gemäss einer weiteren bevorzugten Ausführung sind die Kühlkörper innerhalb einer Kühlkörper-Gruppe über ein Kopplungsfluid miteinander gekoppelt, wobei das Kopplungsfluid ein inkompressibles Fluid oder ein kompressibles Fluid sein kann. Das Fluid kann aus einer beliebigen Fluidquelle stammen. Es kommen z.B. Luft von einem Kompressor oder Wasser von einer Hydraulikpumpe in Frage.

Besonders vorteilhaft ist es in diesem Fall, wenn in einer die Fluidquelle und die Kühlkörper-Gruppe verbindenden Fluid-Zufuhrleitung ein Ventil angeordnet ist. Diese Ventil kann während des Absenkens der Haltevorrichtung und der an ihr gelagerten Kühlkörper-Gruppen geschlossen werden. Dadurch wird gewährleistet, dass innerhalb und nicht ausserhalb der Kühlkörper-Gruppen eine wirkungsvolle Kopplung der mehreren Kühlkörper untereinander erfolgt.

Die Erfindung wird in der folgenden Beschreibung anhand einer schematischen Darstellung des erfindungsgemässen Prinzips sowie anhand nicht einschränkend aufzufassender Ausführungsbeispiele beschrieben, wobei:

Fig. 1     eine Schnittansicht einer schematischen Darstellung der erfindungsgemässen Vorrichtung zeigt;

Fig. 2A     ein erstes Ausführungsbeispiel der erfindungsgemässen Vorrichtung entlang einer vertikalen Schnittebene zeigt;

Fig. 2B     einen vergrösserten Ausschnitt der Fig. 2A zeigt;

Fig. 3A     ein zweites Ausführungsbeispiel der erfindungsgemässen Vorrichtung entlang einer vertikalen Schnittebene zeigt; und

Fig. 3B     einen vergrösserten Ausschnitt der Fig. 3A zeigt.

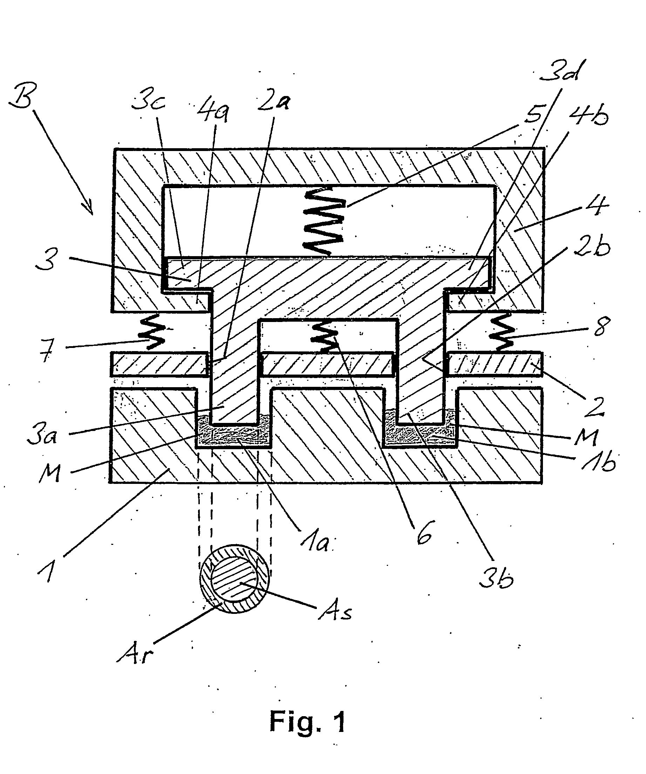

In Fig. 1 sind die wesentlichen Teile der erfindungsgemässen Vorrichtung in einem vertikalen Schnitt schematisch dargestellt. Ganz unten befindet sich ein Formenblock 1 mit zwei Hohlformen bzw. Alveolen 1 a und 1 b. Darüber befindet sich eine Blockeinheit B, welche die folgenden drei Elemente aufweist: eine Abdichtplatte 2, einen Stempelblock 3 und eine Haltevorrichtung 4.

Die Abdichtplatte 2 enthält eine erste Durchführung 2a und eine zweite Durchführung 2b, durch die ein erster Kühlkörper 3a bzw. ein zweiter Kühlkörper 3b des Stempelblocks 3 hindurchragt. Das über dem Stempelblock 3 oder in den Kühlkörpern 3a, 3b strömende Kühlmittel und die in den Kühlkörpern angeordneten Kühlmittelleitungen sind in Fig. 1 nicht gezeigt. Der Querschnitt As der Kühlkörper 3a und 3b ist identisch zu dem Querschnitt der Durchführungen 2a und 2b der Abdichtplatte 2. Der Stempelblock 3 besitzt ausserdem eine linke Schulter 3c sowie eine rechte Schulter 3d. Die Haltevorrichtung 4 besitzt eine linke Schulter 4a und eine rechte Schulter 4b, die als Anschlag für die linke Schulter 3c bzw. für die rechte Schulter 3d des Stempelblocks 3 dienen.

Die in Fig. 1 gezeigten Schultern können aber beliebig ausgebildet sein. Wichtig ist lediglich, dass sie so ausgelegt sind, dass sie den Stempelblock 3 halten können. Bei den Schultern 4a und 4b handelt es sich daher um Stempelblock-Halteschultern, die dazu beitragen, ein Herausfallen des Stempelblocks 3 aus der Haltevorrichtung 4 zu verhindern.

Die Blockeinheit B weist ausserdem die folgenden vier Federelemente auf: eine erste Feder 5 zwischen dem Stempelblock 3 und der Haltevorrichtung 4, eine zweite Feder 6 zwischen der Abdichtplatte 2 und dem Stempelblock 3, eine dritte Feder 7 und eine vierte Feder 8 jeweils zwischen der Abdichtplatte 2 und der Haltevorrichtung 4 auf der linken bzw. der rechten Seite der Blockeinheit B.

Die in der Blockeinheit B mittig angeordnete Feder 5 federt den Stempelblock 3 gegen die Haltevorrichtung 4 ab. Die in der Blockeinheit B ebenfalls mittig angeordnete Feder 6 federt die Abdichtplatte 2 gegen den Stempelblock 3 ab. Die in der Blockeinheit B links und rechts angeordneten Federn 7 bzw. 8 federn die Abdichtplatte 2 gegen die Haltevorrichtung 4 ab.

Vorzugsweise wird die Feder 6 weggelassen. Es sind dann lediglich die Feder 5 zwischen dem Stempelblock 3 und der Haltevorrichtung 4 sowie die Federn 7 und 8 jeweils zwischen der Abdichtplatte 2 und der Haltevorrichtung 4 vorhanden. Die Feder 5 wirkt als Druckfeder, z.B. als Stahlfeder, als Teil einer Pneumatik oder als Teil einer Hydraulik, d.h. sie drückt den Stempelblock 3 gegen den durch die Fettmasse M bewirkten und nach oben gerichteten hydraulischen Gegendruck (Auftrieb) nach unten. Wenn der hydraulische Gegendruck der Masse M grösser als die Kraft der Druckfeder 5 ist, ergibt sich ein Wegausgleich für den Stempelblock 3.

Die über dem Formenblock 1 angeordnete Abdichtplatte 2 ist nicht unabhängig aufgehängt. Es können jedoch Volumenunterschiede zwischen den einzelnen geformten Verzehrgütern, z.B. Schokoladenhülsen, die ggf. auch aus Unebenheiten der oberen Fläche des Formenblocks 1 resultieren, auch indirekt durch die Abdichtplatte 2 wiederum über die leicht variablen Wege der Kühlkörper 3a, 3b ("Kaltstempelwege") bei jeder Hohlform 1 a, 1 b ("Alveole") ausgeglichen werden.

In Fig. 1 ist die erfindungsgemässe Vorrichtung während eines Schrittes des eingangs beschriebenen Kaltstempelverfahrens gezeigt.

Schritt 1 (Eindosieren)

Geschmolzene Fettmasse M wird in die Hohlformen 1a und 1 b des Formenblocks 1 eindosiert, so dass die Hohlformen 1 a und 1 b zu einem Teil mit der geschmolzenen Masse M gefüllt sind. Der Formenblock 1 mit den teilgefüllten Hohlformen 1a und 1b wird dann kurz vibriert, um eventuelle Gaseinschlüsse aus der flüssigen Masse M auszutreiben.

Schritt 2 (Absenken, Pressen)

Dann wird die Blockeinheit B mit dem in ihr gelagerten Stempelblock 3 und dessen Kühlkörpern 3a und 3b durch eine auf die Haltevorrichtung 4 der Blockeinheit B einwirkende, abwärts gerichtete Kraft nach unten gegen den Formenblock 1 abgesenkt (diese Phase ist in Fig. 1 gezeigt), so dass die stempelartigen Kühlkörper 3a und 3b in die mit der geschmolzenen Fettmasse M teilgefüllten Hohlformen 1a bzw. 1b eindringen und die geschmolzene Masse M derart verdrängen, dass sie sich in dem jeweiligen Hohlraum zwischen der Aussenfläche eines Kühlkörpers 3a, 3b und der Innenfläche einer Hohlform 1a bzw. 1b verteilt. Die Federn 6, 7 und 8 sind ausreichend hart, dass die Abdichtplatte 2 gegen den Formenblock gedrückt wird und die beiden mit der Masse M dann komplett gefüllten Hohlräume nach oben abdichtet und geschlossen hält, wenn der Stempel 3a und der Stempel 3b gegen die Masse M in der Hohlform 1 a bzw. in der Hohlform 1 b gepresst wird, wobei sich in der Masse ein Druck p einstellt. Die Feder 6 kann hierbei auch weggelassen werden, wie weiter oben erläutert wurde. In diesem Zustand herrscht dann ein Gleichgewicht zwischen einer Kraft F, die über die Haltevorrichtung 4 auf die Blockeinheit B nach unten einwirkt, und einer über die beiden Stempelflächen As des Stempelblocks 3 sowie über die beiden Ringflächen Ar der Abdichtplatte 2 nach oben auf die Blockeinheit B einwirkenden Kraft 2 x p x (As+Ar).

Schritt 3 (Pressen, Kühlen)

Die Blockeinheit B befindet sich nun im Gleichgewicht zwischen der abwärts gerichteten Kraft F und der aufwärts gerichteten Kraft, die durch die flüssige Masse M, in welcher der Druck p herrscht, auf die Blockeinheit B einwirkt, also:

$$F = 2 \times p \times (As+Ar).$$

Dabei ist As die effektive Stempelfläche der Kühlkörper 3a und 3b, und Ar ist die den mit Masse M gefüllten Hohlraum abdichtende effektive Ringfläche der Abdichtplatte 2. Die Kühlkörper 3a und 3b verbleiben dann während einer kurzen Verweilzeit in dieser abgesenkten Stellung, bis die in den jeweiligen Hohlräumen verteilte Masse M erstarrt ist.

Schritt 4 (Anheben, Entnahme)

Anschliessend wird die Blockeinheit B wieder angehoben, und die fertig geformten schalenartigen Verzehrgüter aus der erstarrten Masse M können aus den Hohlformen z.B. durch Ausschlagen entnommen werden.

Bei dem in Schritt 3 erreichten Gleichgewichtszustand erreichen die drei Elemente 2, 3, 4 der Blockeinheit B eine Gleichgewichtsstellung, in der die drei Elemente 2, 3, 4 jeweils um eine vertikale Wegstrecke gegenüber einer Ausgangsstellung verschoben sind. Als Ausgangsstellung kann z.B. die Stellung betrachtet werden, bei der die Abdichtplatte 2 von oben gegen die Formenplatte 1 stösst und noch keine der Federn 5, 6, 7, 8 komprimiert ist und auch die noch flüssige Masse M nicht oder nur teilweise in den Hohlräumen zwischen den Kühlkörpern 3a, 3b und den Hohlformen 1 a, 1 b verteilt ist.

Die Federkonstanten k1, k2, k3, k4 der Federn 5 und/oder 6, der Feder 7 und der Feder 8 sind so ausgelegt, dass, wenn die Haltevorrichtung 4 gegenüber ihrer Ausgangsstellung um eine Wegstrecke s1 nach unten gedrückt wird, sich der Stempelblock 3 ggf. nur um eine Wegstrecke s2 < s1 nach unten bewegen kann.

Die Kraft F, der Druck p, die Flächen As und Ar, die Federkonstanten k1, k2, k3, k4 sowie die Wege s1 und s2 stehen über das jeweilige vertikale Kräftegleichgewicht an der Abdichtplatte 2, am Stempelblock 3 und an der Haltevorrichtung 4 zueinander in Beziehung und können je nach Bedarf (z.B. Forderung s2 < s1) aufeinander abgestimmt werden.

Die Schultern 3c, 3d des Stempelblocks 3 und die Schultern 4a, 4b der Haltevorrichtung 4 können auch weggelassen werden. Die Funktion der Schultern kann auch von der Feder 5 allein übernommen werden. Der Stempelblock 3 ist im Betrieb "schwimmend" gelagert und befindet sich im Gleichgewicht zwischen der durch die Federn 5 und/oder 6 einwirkenden Kraft und der über den Druck der Masse M einwirkenden Kraft.

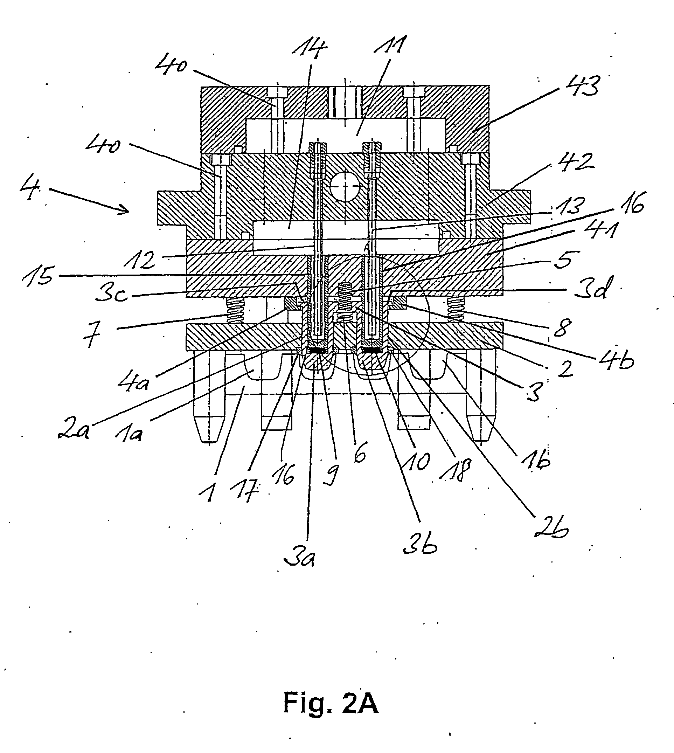

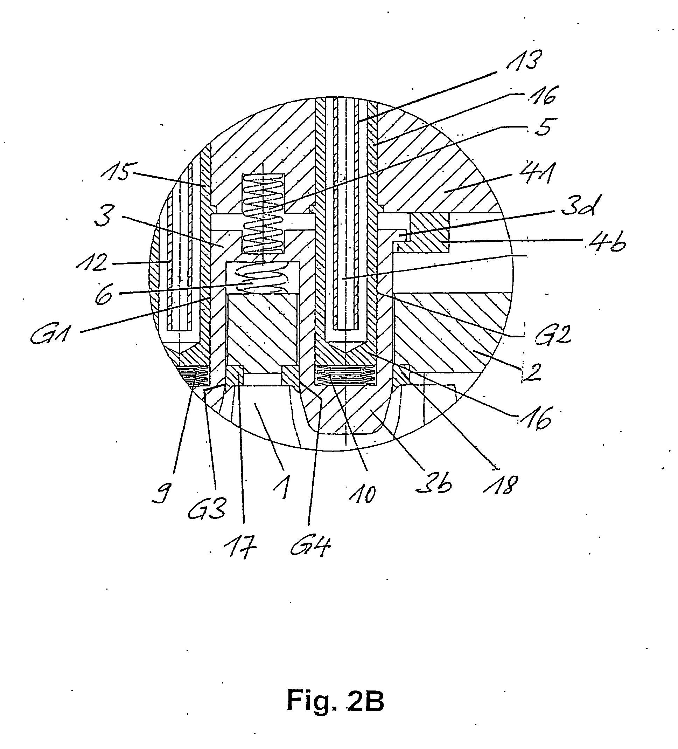

Fig. 2A zeigt ein erstes Ausführungsbeispiel der erfindungsgemässen Vorrichtung entlang einer vertikalen Schnittebene. Fig. 2B zeigt einen vergrösserten Ausschnitt der Fig. 2A. Elemente in Fig. 2A und Fig. 2B, die denen von Fig. 1 entsprechen, tragen in Fig. 2A und Fig. 2B dieselben Bezugszeichen wie in Fig. 1.

Die Haltevorrichtung 4 in Fig. 2A enthält eine untere Platte 41, eine mittlere Platte 42 und eine obere Platte 43, die über Schraubverbindungen 40 miteinander verschraubt sind. Durch eine Aussparung in der oberen Platte 43 ist eine Kühlmittelvorlauf-Verteilerleitung 11 gebildet, von der ein Vorlaufrohr 12 und in ein Vorlaufrohr 13 abzweigen, die sich beide durch die mittlere Platte 42 hindurch bis in den Stempelblock 3 erstrecken. Ähnlich ist durch eine Aussparung in der mittleren Platte 42 und durch eine Aussparung in der unteren Platte 41 eine Kühlmittelrücklauf-Sammelleitung 14 gebildet, in die ein Rücklaufrohr 15 und ein Rücklaufrohr 16 münden. Die beiden Rücklaufrohre 15 und 16 sind jeweils als Blindrohr ausgebildet, erstrecken sich durch die untere Platte 41 hindurch und ragen mit ihrem blinden Ende aus der unteren Platte 41 nach unten heraus. Das Vorlaufrohr 12 und das Vorlaufrohr 13 erstrecken sich durch die mittlere Platte 42 hindurch, durchqueren die Kühlmittelrücklauf-Sammelleitung 14 und ragen schliesslich in das Rücklaufrohr 15 bzw. in das Rücklaufrohr 16 hinein. Dadurch wird eine intensive Kühlung der beiden Rücklaufrohre 15 und 16 gewährleistet, da sich die "Kühlquelle" bzw. Wärmesenke sehr nahe an dem Ort befindet, an dem gekühlt werden muss.

Die Rücklaufrohre 15, 16 haben eine Doppelfunktion. Einerseits bilden sie die Kühlung für die Kühlkörper (Stempel) 3a, 3b des Stempelblocks 3, mit denen sie in Kontakt sind. Andererseits dienen sie als Gleitlager, auf denen der Stempelblock 3 mit seinen hohlen Kühlkörpern (Stempeln) 3a, 3b gleitend gelagert ist. In Fig. 2B sind die durch die Aussenflächen der Rücklaufrohre 15, 16 und durch die Innenflächen der hohlen Kühlkörper 3a, 3b gebildeten Gleitflächenpaare mit G1 bzw. G2 bezeichnet.

Der Stempelblock 3 der Fig. 2A und der Fig. 2B entspricht im wesentlichen dem schon in Fig. 1 schematisch dargestellten Stempelblock 3 mit einer linken Schulter 3c und einer rechten Schulter 3d, die mit dem Stempelblock 3 einstückig sind. Die Schultern 3c und 3d des Stempelblocks 3 wirken mit den Schultern 4a bzw. 4b der Haltevorrichtung 4 zusammen. Die Schultern 4a und 4b sind an der Unterseite der unteren Platte 41 durch nicht dargestellte Befestigungsmittel befestigt.

Die beiden Federn 5 und 6 entsprechen den Federn 5 und 6 der Fig. 1. Zusätzlich sind zwischen dem blinden Ende der als Kühlung und als Gleitlager dienenden Rücklaufrohre 15, 16 und dem Boden der hohlen Kühlkörper (Stempel) 3a, 3b noch jeweils eine weitere Feder 9, 10 angeordnet. Die Feder 5 kann durch eine Schraubenfeder gebildet sein, während die Federn 9 und 10 vorzugsweise durch platzsparende Tellerfedern gebildet sind. Die drei Federn 5, 9 und 10 der Fig. 2A wirken jeweils als Stempelblock-Druckfeder. Sie drücken den Stempelblock 3 gegen den Formenblock 1. Ihre gemeinsame resultierende Wirkung entspricht der Wirkung der in Fig. 1 schematisch dargestellten einzigen Stempelblock-Druckfeder 5.

Die Abdichtplatte 2 der Fig. 2A und der Fig. 2B entspricht ebenfalls im wesentlichen der schon in Fig. 1 schematisch dargestellten Abdichtplatte 2. Die drei Federn 6, 7 und 8 entsprechen den Federn 6, 7 und 8 der Fig. 1. Die drei Federn 6, 7 und 8 der Fig. 2A wirken jeweils als Abdichtplatten-Druckfeder. Sie drücken die Abdichtplatte 2 gegen den Formenblock 1. Am jeweiligen unteren Ende der Durchführungen 2a und 2b der Abdichtplatte 2 ist jeweils ein Hülsenabschluss-Formgeber 17 bzw. 18 durch nicht dargestellte Befestigungsmittel befestigt. Der Stempel block 3 ist auch über die Aussenflächen seiner Kühlkörper (Stempel) 3a und 3b an den Innenflächen der ringförmigen Hülsenabschluss-Formgeber 17 bzw. 18 gleitend gelagert. In Fig. 2B sind die durch die Aussenflächen der Kühlkörper 3a, 3b und durch die Innenfläche der ringförmigen Hülsenabschluss-Formgeber 17 bzw. 18 gebildeten Gleitflächenpaare mit G3 bzw. G4 bezeichnet.

Auch bei diesem ersten Ausführungsbeispiel kann die Feder 6 weggelassen werden.

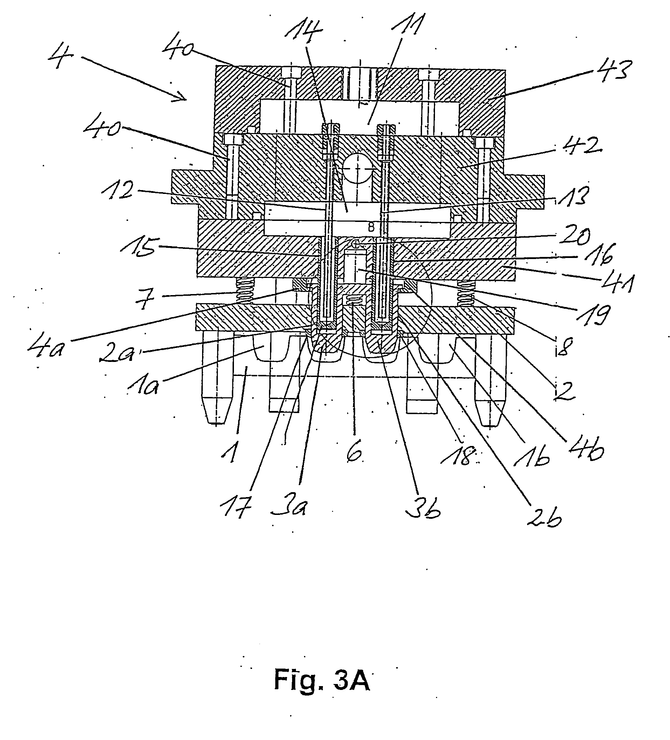

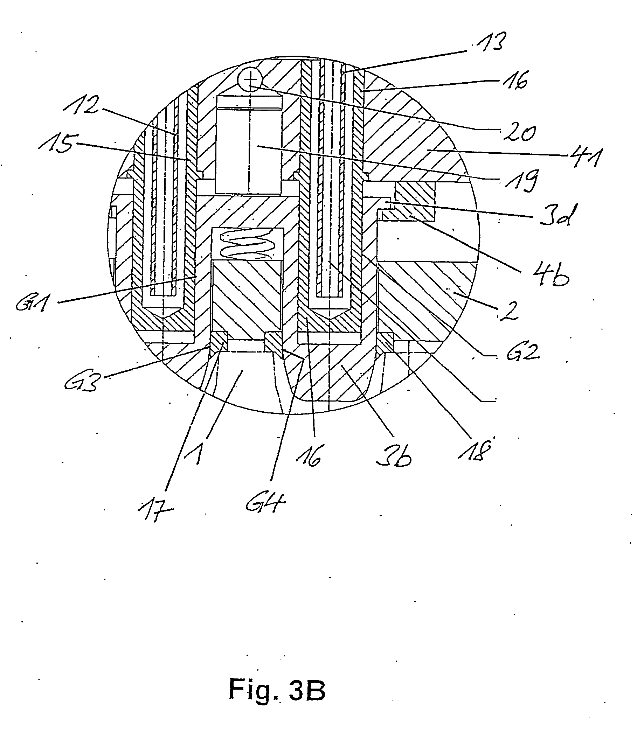

Fig. 3A zeigt ein zweites Ausführungsbeispiel der erfindungsgemässen Vorrichtung entlang einer vertikalen Schnittebene. Fig. 3B zeigt einen vergrösserten Ausschnitt der Fig. 3A. Elemente in Fig. 3A und Fig. 3B, die denen von Fig. 1 oder Fig. 2 entsprechen, tragen in Fig. 2A und Fig. 2B dieselben Bezugszeichen wie in Fig. 1.

Der Unterschied zwischen dem ersten und dem zweiten Ausführungsbeispiel besteht darin, dass in dem zweiten Ausführungsbeispiel ein Druckzylinder 19 zwischen der durch die Platten 41, 42, 43 und die Rücklaufrohre 15, 16 gebildeten Haltevorrichtung 4 und dem Stempelblock 3 angeordnet ist, der die Funktion der Feder 5 in Fig. 1 bzw. der drei Federn 5, 9 und 10 in Fig. 2A übernimmt. Der Druckzylinder 19 kommuniziert mit einem Druckluftkanal 20, über den Druckluft an den Druckzylinder 19 herangeführt wird.

Auch bei diesem zweiten Ausführungsbeispiel kann die Feder 6 weggelassen werden.

Der Stempelblock 3 bildet eine einstückige Einheit aus mindestens zwei Einzelstempeln bzw. Kühlkörpern 3a, 3b. Bevorzugte Materialien sind gut wärmeleitende Metalle oder Metall-Legierungen, wie z.B. Kupfer oder Aluminium, wobei vorzugsweise die der Fettmasse zugewandte Aussenfläche der Kühlstempel 3a, 3b mit Silber beschichtet ist. Die Silberbeschichtung wirkt antiseptisch.

Die Hülsenabschluss-Formgeber 17, 18 dienen zur Formgebung der Hülsen M im oberen Bereich und zur Abdichtung des Formendesigns. Die Formgebung der Hülsen M im oberen Bereich kann so gestaltet sein, dass sich die Hülse vollständig unterhalb der oberen Fläche des Formenblocks 1 erstreckt oder sich teilweise oberhalb dieser Fläche erstreckt. Die Hülsenabschluss-Formgeber 17, 18 sind Massivringe, die mit der Abdichtplatte 2 einstückig oder mit ihr verbunden ausgebildet sind.

An einer Abdichtplatte 2 sind mehrere Hülsenabschluss-Formgeber 17, 18 befestigt. Es können je Maschine mehrere austauschbare Abdichtplatten 2 mit unterschiedlichen Hülsenabschluss-Formgebern 17, 18 vorhanden sein. Die Abdichtplatte 2 macht keine Relativbewegung zum Formenblock 1, nachdem die Hülsenabschluss-Formgeber 17, 18 mit dem Formenblock 1 in Kontakt sind.

Die Rücklaufrohre 15, 16 dienen zur Stempelführung und zum Kühlmittelrückfluss. Über die Vorlaufrohre 12, 13 wird Kühlmittel gegen das Innere der Stempelköpfe 3a, 3b geleitet, an der Innenseite des Stempelkopfes umgelenkt und durch die Rücklaufrohre 15, 16 abgeführt. Das Kühlmedium gibt damit seine Kälte wirkungsvoll an die Kühlkörper 3a, 3b des Stempelblocks 3 weiter. Die Rücklaufrohre 15, 16 sind mit der Haltevorrichtung 4 fest verbunden, während sie mit dem Stempelblock 3 über die Gleitflächenpaare G1, G2 gleitend verbunden sind, d.h. die Kontaktflächen zwischen Stempel 3a, 3b und Stempelführung 16, 17 sind Gleitflächen.

Die Abdichtplatten-Druckfedern 7, 8 dienen dazu, dass nach Kontakt der Hülsenabschluss-Formgeber 17, 18 mit dem Formenblock 1 der Stempelblock 3 noch weiter relativ zum Formenblock 1 bewegt werden kann.

Die Haltevorrichtung 4 (Basiselement) setzt sich aus mehreren Platten 41, 42, 43 zusammen, die alle zusammen die Bewegung eines (in den Figuren nicht dargestellten) Antriebs, z.B. eines Servomotors, durchführen. Dabei wird der Weg der Haltevorrichtung 4 und somit auch der Stempelblöcke 3 durch den Servomotor vorgegeben. Es gibt keine Relativbewegung zwischen dem Antrieb und der Haltevorrichtung 4. Die Haltevorrichtung 4 übt über die Abdichtplatten-Druckfedern 6, 7, 8 eine Kraft auf die Abdichtplatte 2 aus, so dass sich diese bewegt, bis der Kontakt zwischen den Hülsenabschluss-Formgebern 17, 18 und dem Formenblock 1 erfolgt.

Wie schon erwähnt, ist es besonders vorteilhaft, wenn eine Kopplung der Kühlkörper 3a, 3b innerhalb eines Stempelblocks 3 über ein Kopplungsfluid erfolgt. Hierfür kann ein kompressibles Fluid wie Luft oder ein praktisch inkompressibles Fluid wie Wasser verwendet werden. Vorzugsweise enthält die entsprechende Hydraulik-Zuleitung oder Pneumatik-Zuleitung ein Ventil, das beim Herbfahren des Stempelblocks 3 geschlossen wird, so dass die besagte mechanische Fluidkopplung der Kühlkörper 3a, 3b innerhalb des Stempelblocks 3 oder innerhalb der Haltevorrichtung 4 erfolgt. Auf diese Weise wird verhindert, dass eine derartige Fluidkopplung weit ausserhalb der Haltevorrichtung 4 oder weit ausserhalb des Stempelblocks 3 unter schwer definierbaren Verhältnissen erfolgt (Länge der Fluid-Zufuhrleitung, Kenngrössen der Fluidquelle wie Kompressor oder Hydraulikpumpe). Vielmehr wird die Fluidkopplung in einen definierten Bereich, d.h. in eine bestimmte Fluidkammer oder ggf. mehrere zusammenwirkende Fluidkammern im Stempelblock 3 oder in der Haltevorrichtung 4 verlegt. Somit sind die Eigenschaften der Fluidkopplung praktisch unabhängig von der Peripherie (Zuleitungen, Hilfsaggregate, etc.) der erfindungsgemässen Vorrichtung.

Für die während des Kaltstempelns auftretende "schwimmende Lagerung" der Stempelblöcke 3 der Haltevorrichtung 4 auf der zu formenden und noch flüssigen Masse M in dem Formenblock 1 gibt es mehrere Varianten.

Bei einer ersten Variante werden die einzelnen Stempelblöcke 3 und somit die einzelnen Stempel bzw. Kühlkörper 3a, 3b von oben durch Druckluft oder Druckwasser beaufschlagt. Jeder Stempelblock 3 wird von oben durch Druckluft oder Druckwasser beaufschlagt, so dass er durch den von oben einwirkenden Abtrieb durch die Druckluft oder das Druckwasser und durch den von unten einwirkenden Auftrieb durch die flüssige Masse M im Gleichgewicht gehalten wird.

Im Falle der nicht starr, sondern über die erwähnte Fluidkopplung gekoppelten Stempel oder Kühlkörper 3a, 3b innerhalb einer Kühlkörper-Gruppe 3 sind die einzelnen Stempel bzw. Kühlkörper 3a, 3b in der Gruppe jeweils gleitend gelagert und werden von oben über kommunizierende Fluidleitungen mittels Druckluft oder Druckwasser beaufschlagt, so dass jeder Stempel bzw. Kühlkörper 3a, 3b durch den von oben einwirkenden Abtrieb durch die Druckluft oder das Druckwasser und durch den von unten einwirkenden Auftrieb durch die flüssige Masse M im Gleichgewicht gehalten wird. Die Einwirkung des Auftriebs erfolgt dabei individuell für jeden Stempel 3a, 3b, während die Einwirkung des Abtriebs für alle Stempel 3a, 3b einer Stempelgruppe 3 fluidgekoppelt erfolgt.

Bei einer zweiten Variante werden die einzelnen Stempelblöcke 3 und somit die einzelnen Stempel bzw. Kühlkörper 3a, 3b von oben und unten durch Druckluft oder Druckwasser beaufschlagt. Jeder Stempelblock 3 wird von oben durch Druckluft oder Druckwasser beaufschlagt, so dass er durch den von oben einwirkenden Abtrieb durch die Druckluft oder das Druckwasser und durch den von unten einwirkenden Auftrieb durch die flüssige Masse M und die Druckluft oder das Druckwasser im Gleichgewicht gehalten wird.

Im Falle der nicht starr, sondern über die erwähnte Fluidkopplung gekoppelten Stempel oder Kühlkörper 3a, 3b innerhalb einer Kühlkörper-Gruppe 3 sind die einzelnen Stempel bzw. Kühlkörper 3a, 3b in der Gruppe jeweils gleitend gelagert und werden von oben und unten über kommunizierende Fluidleitungen mittels Druckluft oder Druckwasser beaufschlagt, so dass jeder Stempel bzw. Kühlkörper 3a, 3b durch den von oben einwirkenden Abtrieb durch die Druckluft oder durch das Druckwasser und durch den von unten einwirkenden Auftrieb durch die flüssige Masse M und durch die Druckluft oder das Druckwasser im Gleichgewicht gehalten wird. Die Einwirkung des Auftriebs erfolgt dabei fluidgekoppelt für jeden Stempel 3a, 3b (individueller Anteil durch Masse M und gekoppelter Anteil durch Druckluft oder Druckwasser). Auch die Einwirkung des Abtriebs für alle Stempel 3a, 3b einer Stempelgruppe 3 erfolgt fluidgekoppelt.

Die Erfindung ermöglicht somit eine reichhaltige Auswahl an Kopplungsmöglichkeiten der einzelnen Kühlkörper bzw. Stempel 3a, 3b jeder Kühlkörper-Gruppe bzw. jedes Stempelblocks 3:

1) Kühlkörper untereinander starr gekoppelt (massiver, einstückiger Stempelblock).

2) Kühlkörper untereinander fluidgekoppelt von oben (kommunizierende Fluibeaufschlagung gleitend gelagerter Kühlkörper in einer Kühlkörper-Gruppe von oben, d.h. mehrteiliger "Stempelblock").

3) Kühlkörper untereinander fluidgekoppelt von oben und von unten (kommunizierende Fluidbeaufschlagung gleitend gelagerter Kühlkörper in einer Kühlkörper-Gruppe von oben und von unten, d.h. mehrteiliger "Stempelblock").

4) Kompressibles Kopplungsfluid, z.B. Luft.

5) Inkompressibles Kopplungsfluid, z.B. Wasser.

Somit lassen sich die Kopplungseigenschaften der Kühlkörper bzw. Stempel untereinander über einen weiten Bereich einstellen:

➢ sehr starke Kopplung bis sehr schwache Kopplung (Auswahl 1 bis 3)
➢ sehr weiche oder sehr harte Kopplung (Auswahl 4 bzw. 5).

Gemäss Version 4) lässt sich der Kaltstempel-Vorgang z.B. folgendermassen beschreiben:

a) Absenken des gesamten Systems (Stempelplatte mit Design-Abdichtung und übriges System) über einen Antrieb z.B. in Form eines Servomotors

b) Aufsetzen der Design-Abdichtungen auf der Form (ggf. haben die Stempel zu diesem Zeitpunkt schon etwas Masse verdrängt)

c) Weiteres Absenken des übrigen Systems unter Zusammendrücken der Federn und Eintauchen in die Masse sowie Verdrängen der Masse über die Stempel bis zu einem vordefinierten Weg (Steuerungseinstellung)

d) Falls während c) die hydraulische Kraft der Masse zu einem Stempel grösser als die Federkraft der Federn wird, verharrt der Stempel trotz weiterem Absenken des weiteren Systems an seinem Ort.

Sobald der Stempel auf einen geringen Überdruck stösst, d.h. wenn die hydraulische Druckkraft der Masse grösser als der pneumatische Druck auf den Stempel ist, gibt er nach, und die Bewegung des Stempels in die Alveole hinein wird gestoppt. Der Druckraum aller Stempel wird hierdurch verkleinert, da der Stempel in seiner Position stehen bleibt, während das (weitere) System nach unten weiterbewegt wird. Lediglich die Stempelplatte und die Design-Abdichtungen stehen wegen ihres Kontaktes mit der Form still. Durch die Verkleinerung des Druckraumes, die eine Komprimierung der im Druckraum enthaltenen Luft bewirkt, wird die Druckkraft auf die jeweiligen Stempel erhöht, d.h. es besteht keine abhängige, sondern eine gekoppelte Aufhängung.

**Bezugszeichen**

| | |
|---|---|
| 1 | Formenblock |
| 1a | Hohlform bzw. Alveole |
| 1b | Hohlform bzw. Alveole |
| 2 | Abdichtplatte |
| 2a | Durchführung |
| 2b | Durchführung |
| 3 | Stempelblock |
| 3a | Kühlkörper bzw. Stempel |
| 3b | Kühlkörper bzw. Stempel |
| 3c | Schulter |
| 3d | Schulter |
| 4 | Haltevorrichtung |
| 4a | Schulter |
| 4b | Schulter |
| 5 | Feder, Stempelblock-Druckfeder |
| 6 | Feder, Abdichtplatten-Druckfeder |
| 7 | Feder, Abdichtplatten-Druckfeder |
| 8 | Feder, Abdichtplatten-Druckfeder |
| 9 | Feder, Stempelblock-Druckfeder |
| 10 | Feder, Stempelblock-Druckfeder |
| 11 | Kühlmittelvorlauf-Verteilerleitung |
| 12 | Vorlaufrohr |
| 13 | Vorlaufrohr |
| 14 | Kühlmittelrücklauf-Sammelleitung |

| | |
|---|---|
| 15 | Rücklaufrohr |
| 16 | Rücklaufrohr |
| 17 | Hülsenabschluss-Formgeber |
| 18 | Hülsenabschluss-Formgeber |
| 19 | Druckzylinder |
| 20 | Druckluftkanal |
| M | Fettmasse |
| B | Blockeinheit |
| F | Kraft auf Blockeinheit |
| As | effektive Stempelfläche (vertikale Projektion) |
| Ar | effektive Ringfläche (vertikale Projektion) |
| 40 | Schraubverbindung |
| 41 | untere Platte |
| 42 | mittlere Platte |
| 43 | obere Platte |
| G1 | Gleitflächenpaar |
| G2 | Gleitflächenpaar |
| G3 | Gleitflächenpaar |
| G4 | Gleitflächenpaar |

## Patentansprüche

1. Vorrichtung zur Herstellung schalenartig geformter Verzehrgüter aus einer Fettmasse, insbesondere einer kakaohaltigen bzw. schokoladeartigen Fettmasse, wobei die Vorrichtung die folgenden Mittel aufweist:

> ➢ eine Vielzahl mit der Fettmasse (M) im fliessfähigen temperierten Zustand befüllbarer Hohlformen (1a, 1b), die als Vertiefungen in einem Formenblock (1) ausgebildet sind, wobei die Innenfläche einer jeweiligen Hohlform (1a, 1 b) die Aussenfläche eines herzustellenden schalenartigen Verzehrgutes bestimmt;
> ➢ eine Vielzahl stempelartiger Kühlkörper (3a, 3b), die an einer Haltevorrichtung (4) beweglich gelagert sind, wobei jeweils ein Kühlkörper (3a, 3b) in jeweils eine der Hohlformen (1a bzw. 1 b) absenkbar ist und die Aussenfläche eines jeweiligen Kühlkörpers (3a, 3b) die Innenfläche des herzustellenden schalenartigen Verzehrgutes (M) bestimmt;

**dadurch gekennzeichnet, dass** die Vielzahl der an der Haltevorrichtung (4) gelagerten Kühlkörper (3a, 3b) aus einzelnen Kühlkörper-Gruppen (3) besteht, innerhalb derer mehrere Kühlkörper (3a, 3b) miteinander gekoppelt an der Haltevorrichtung (4) gelagert sind; und dass die jeweiligen Kühlkörper-Gruppen (3) voneinander unabhängig an der Haltevorrichtung (4) gelagert sind.

2. Vorrichtung nach Anspruch 1, **dadurch gekennzeichnet, dass** die Kühlkörper-Gruppen (3) aus aneinandergrenzenden Kühlkörpern bestehende Kühlkörper-Blöcke sind.

3. Vorrichtung nach Anspruch 1 oder 2, **dadurch gekennzeichnet, dass** die Kühlkörper (3a, 3b) innerhalb einer Kühlkörper-Gruppe (3) miteinander starr verbunden sind.

4. Vorrichtung nach Anspruch 3, **dadurch gekennzeichnet, dass** die Kühlkörper-Gruppe (3) ein einstückiges Gebilde ist, das mehrere stempelartige Kühlkörper aufweist.

5. Vorrichtung nach Anspruch 1 oder 2, **dadurch gekennzeichnet, dass** die Kühlkörper (3a, 3b) innerhalb einer Kühlkörper-Gruppe (3) über ein Kopplungsfluid miteinander gekoppelt sind.

6. Vorrichtung nach Anspruch 5, **dadurch gekennzeichnet, dass** das Kopplungsfluid ein inkompressibles Fluid wie z.B. Wasser ist.

7. Vorrichtung nach Anspruch 5, **dadurch gekennzeichnet, dass** das Kopplungsfluid ein kompressibles Fluid wie z.B. Luft ist.

8. Vorrichtung nach einem der Ansprüche 5 bis 7, **dadurch gekennzeichnet, dass** in einer eine Fluidquelle und die Kühlkörper-Gruppe (3) verbindenden Fluid-Zufuhrleitung ein Ventil angeordnet ist.

9. Vorrichtung nach einem der Ansprüche 1 bis 8, **dadurch gekennzeichnet, dass** die Kühlkörper-Gruppen (3) jeweils zwei Kühlkörper (3a, 3b) aufweisende Zweiergruppen sind.

10. Vorrichtung nach einem der Ansprüche 1 bis 8, **dadurch gekennzeichnet, dass** die Kühlkörper-Gruppen (3) jeweils drei Kühlkörper aufweisende Dreiergruppen sind.

11. Vorrichtung nach einem der Ansprüche 1 bis 8, **dadurch gekennzeichnet, dass** die Kühlkörper-Gruppen (3) jeweils vier Kühlkörper aufweisende Vierergruppen sind.

## Claims

1. A device for manufacturing feedstuff molded into shells out of a fatty substance, in particular a cocoa-containing or chocolate-like fatty substance, wherein the device exhibits the following means:

> - a plurality of molds (1a, 1b) that can be filled with the fatty substance (M) in a liquid, temperature-controlled state, which are designed as depressions in a mold block (1), wherein the interior surface of a respective mold (1a, 1b) here determines the exterior surface of a shell-like feedstuff to be manufactured

- a plurality of stamp-like cooling bodies (3a, 3b), which are movably mounted on a mounting device (4), wherein a respective cooling body (3a, 3b) can be lowered into a respective mold (1a or 1b), and the exterior surface of a respective cooling body (3a, 3b) determines the interior surface of the shell-like feedstuff (M) to be manufactured;

**characterized in that** the plurality of cooling bodies (3a, 3b) mounted on the mounting device (4) consists of individual cooling body groups (3), within which several cooling bodies (3a, 3b) are coupled together and secured to the mounting device (4), and that the respective cooling body groups (3) are independently mounted on the mounting device (4).

2. The device according to claim 1, **characterized in that** the cooling body groups (3) are cooling body blocks consisting of adjacent cooling bodies.

3. The device according to claim 1 or 2, **characterized in that** the cooling bodies (3a, 3b) within a cooling body group (3) are rigidly interconnected.

4. The device according to claim 3, **characterized in that** the cooling group (3) is a one-piece structure exhibiting several stamp-like cooling bodies.

5. The device according to claim 1 or 2, **characterized in that** the cooling bodies (3a, 3b) within a cooling body group (3) are coupled together via a coupling fluid.

6. The device according to claim 5, **characterized in that** the coupling fluid is an incompressible fluid, e.g., water.

7. The device according to claim 5, **characterized in that** the coupling fluid is a compressible fluid, e.g., air.

8. The device according to one of claims 5 to 7, **characterized in that** a valve is arranged in a fluid feed line that connects a fluid source and the cooling body group (3).

9. The device according to one of claims 1 to 8, **characterized in that** the cooling body groups (3) are groups of two each having two cooling bodies (3a, 3b).

10. The device according to one of claims 1 to 8, **characterized in that** the cooling body groups (3) are groups of three each having three cooling bodies.

11. The device according to one of claims 1 to 8, **characterized in that** the cooling body groups (3) are groups of four each having four cooling bodies.

**Revendications**

1. Dispositif pour fabriquer des produits de consommation en forme de coque à partir d'une composition à base de matière grasse, en particulier d'une composition à base de matière grasse contenant du cacao ou de type chocolat, le dispositif présentant les moyens suivants :

- une pluralité de moules creux (1a, 1b) pouvant être remplis avec la composition à base de matière grasse (M) dans l'état fluide mis à température, qui sont réalisés sous forme de renfoncements dans un bloc de moules (1), la surface intérieure d'un moule creux respectif (1a, 1b) définissant la surface extérieure d'un produit de consommation en forme de coque à fabriquer
- une pluralité de corps de refroidissement de type poinçons (3a, 3b), qui sont montés de manière mobile sur un dispositif de retenue (4), un corps de refroidissement (3a, 3b) pouvant dans chaque cas être abaissé dans l'un des moules creux (1a à 1b) et la surface extérieure de chaque corps de refroidissement (3a, 3b) définissant la surface intérieure du produit de consommation (M) en forme de coque à fabriquer ;

**caractérisé en ce que** la pluralité de corps de refroidissement (3a, 3b) montés sur le dispositif de retenue (4) se compose de groupes de corps de refroidissement individuels (3), à l'intérieur desquels plusieurs corps de refroidissement (3a, 3b) sont montés de manière accouplés les uns aux autres sur le dispositif de retenue (4) ; et **en ce que** les groupes de corps de refroidissement respectifs (3) sont montés indépendamment les uns des autres sur le dispositif de retenue (4).

2. Dispositif selon la revendication 1, **caractérisé en ce que** les groupes de corps de refroidissement (3) sont des blocs de corps de refroidissement constitués de corps de refroidissement adjacents.

3. Dispositif selon la revendication 1 ou 2, **caractérisé en ce que** les corps de refroidissement (3a, 3b) sont connectés rigidement les uns aux autres à l'intérieur d'un groupe de corps de refroidissement (3).

4. Dispositif selon la revendication 3, **caractérisé en ce que** le groupe de corps de refroidissement (3) est une structure d'une seule pièce, qui présente plusieurs corps de refroidissement de type poinçons.

5. Dispositif selon la revendication 1 ou 2, **caractérisé en ce que** les corps de refroidissement (3a, 3b) sont accouplés les uns aux autres par le biais d'un fluide d'accouplement à l'intérieur d'un groupe de corps de refroidissement (3).

6. Dispositif selon la revendication 5, **caractérisé en ce que** le fluide d'accouplement est un fluide incompressible comme par exemple de l'eau.

7. Dispositif selon la revendication 5, **caractérisé en ce que** le fluide d'accouplement est un fluide compressible comme par exemple de l'air.

8. Dispositif selon l'une quelconque des revendications 5 à 7, **caractérisé en ce qu'**une soupape est disposée dans une conduite d'alimentation en fluide reliant une source de fluide et le groupe de corps de refroidissement (3).

9. Dispositif selon l'une quelconque des revendications 1 à 8, **caractérisé en ce que** les groupes de corps de refroidissement (3) sont des groupes de deux présentant à chaque fois deux corps de refroidissement (3a, 3b).

10. Dispositif selon l'une quelconque des revendications 1 à 8, **caractérisé en ce que** les groupes de corps de refroidissement (3) sont des groupes de trois présentant à chaque fois trois corps de refroidissement.

11. Dispositif selon l'une quelconque des revendications 1 à 8, **caractérisé en ce que** les groupes de corps de refroidissement (3) sont des groupes de quatre présentant à chaque fois quatre corps de refroidissement.

**Fig. 1**

Fig. 2A

Fig. 2B

Fig. 3A

Fig. 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0945069 A1
- EP 0925720 A1

- EP 1300086 A1